(19) Europäisches Patentamt
European Patent Office
Office européen des brevets

(11) **EP 2 550 878 B1**

(12) **EUROPEAN PATENT SPECIFICATION**

(45) Date of publication and mention
of the grant of the patent:
**13.05.2015 Bulletin 2015/20**

(51) Int Cl.:
*A24D 3/06* (2006.01)          *A24D 3/16* (2006.01)
*B01J 20/20* (2006.01)          *D21H 17/67* (2006.01)
*B01D 39/18* (2006.01)

(21) Application number: **10848435.3**

(86) International application number:
**PCT/JP2010/055460**

(22) Date of filing: **26.03.2010**

(87) International publication number:
**WO 2011/118042 (29.09.2011 Gazette 2011/39)**

(54) **CHARCOAL FILTER AND CIGARETTE**

KOHLEFILTER UND ZIGARETTE

FILTRE AU CHARBON ET CIGARETTE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**30.01.2013 Bulletin 2013/05**

(73) Proprietor: **Japan Tobacco, Inc.
Tokyo 105-8422 (JP)**

(72) Inventor: **FUJITA, Noritoshi
Tokyo 130-8603 (JP)**

(74) Representative: **Isarpatent
Patent- und Rechtsanwälte
Postfach 44 01 51
80750 München (DE)**

(56) References cited:
**EP-A1- 0 482 283          WO-A1-2006/097852
WO-A1-2007/104908          WO-A1-2008/043988
WO-A2-2009/037568          JP-A- 2005 522 207
JP-A- 2005 523 680          JP-B2- 3 235 962
JP-B2- 3 235 963          JP-B2- 3 547 768
JP-B2- 4 361 850          JP-Y2- 2 602 632**

EP 2 550 878 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a charcoal filter of a charcoal-containing paper on a surface of which charcoal is externally added, and a cigarette using the same.

Background Art

It is desired at present to reduce volatile organic compounds (VOC) in mainstream smoke of cigarettes in terms of health risk, and thus, ability of decreasing VOC is improved by using charcoal. When a large amount of charcoal is used, however, components contributing to taste and flavor are also adsorbed in the charcoal, bringing about a problem of dilution of the taste and flavor. In order to solve these contradicting problems, it is effective to adopt a multi-segment filter in which a charcoal filter is provided to reduce the VOC by charcoal and a flavor-releasing is provided to inhibit dilution of the taste and flavor.

In the case of such a multi-segment filter, functions which are particularly required for the charcoal filter are as follows:

(1) a high ability of decreasing VOC per filter length,
(2) a high performance of filtering tar and nicotine, and
(3) easy and low-cost production process.

Until now, as a form of a charcoal filter, known examples include an acetate charcoal filter; a paper charcoal filter of a folded pulp material on a surface of which charcoal is externally added; a cavity-filled charcoal filter; an internally added paper charcoal filter of a folded charcoal-containing pulp material (which is also referred to as a "carbon scrubber charcoal filter").

Acetate Charcoal Filter

This is a charcoal filter in which an acetate fiber is used as a filter base material, and powdery charcoal is added thereto, which is now most generally produced. When a filter is produced, triacetin, which is a filter plasticizer, is generally added in about 2 to 10 wt%. It is known, however, that a VOC adsorptivity of charcoal is deteriorated by poisoning due to triacetin. In addition, the acetate fiber, which is the filter base material, has no VOC adsorptivity.

Paper Charcoal Filter

This is a charcoal filter in which paper (cellulose) such as a pulp material is used as the filter base material, and powdery charcoal is externally added thereto, and then is folded. In general, after the paper is subjected to a predetermined crimp treatment with a craping roll, a determined amount of charcoal is supplied on the paper with a belt conveyor, and a filter rod is produced in a state in which the charcoal is wrapped with the paper by performing a folding mechanism (Patent Literatures 1 and 2). It is generally known that the paper charcoal filter has higher filtration efficiency per filter ventilation resistance than that of the acetate charcoal filter (Patent Literature 3). In addition, there is no problem of the deterioration of adsorptivity of the charcoal due to the plasticizer, because the plasticizer is not added. The paper which is used as the filter base material has also no VOC adsorptivity, as the acetate fiber.

Cavity-Filled Charcoal Filter

This is a charcoal filter in which a cavity is formed between filters and charcoal is filled in the cavity. Theoretically, the amount of charcoal which can be filled per unit length of the filter can be maximized. In addition, there is no problem of the deterioration of adsorptivity of the charcoal due to the plasticizer, because the plasticizer is not necessary in a part in which the charcoal is filled. When the filling ratio of the charcoal is decreased, however, smoke passes through a void in the part in which the charcoal is filled, and it cannot be brought into contact with the charcoal, thus resulting in remarkable reduction of the VOC adsorptivity. For that reason, there are significant problems of uneven production and a production method. In order to improve the filling efficiency of the charcoal, a method in which suction is performed from an edge face of the filter in the filter production (Patent Literature 4) or a method in which production is performed using charcoal having a uniform particle size (Patent Literature 5) have been developed, but any method has a problem in that an apparatus and a production process become complicated. In addition, "lids" formed of filters are essential at both ends of the part in which the charcoal is filled, for producing the cavity-filled charcoal filter, and there is a constraint on a filter design. Further, there is also a constraint in which the particle size of the charcoal must be set several hundreds µm or more in order not to increase the ventilation resistance in the part in which the charcoal is filled too high.

Internally Added Paper Charcoal Filter (Carbon Scrubber Charcoal Filter)

This is a charcoal filter in which paper containing charcoal with a particle size of, generally, several tens µm is used as a filter base material, and the paper is folded. The adsorptivity per weight of the charcoal can be improved because the adsorption speed can be improved by using charcoal with a small particle size (Non Patent Literature 1 and Patent Literatures 6 and 7). When a pressure applied to the paper in the filter production is taken into account, however, the base material is needed to have a tensile strength of a certain value or more. The amount of the charcoal which can be contained in the paper is limited, and thus remarkable reduction of VOC is difficult.

Since the acetate charcoal filter and the paper charcoal filter have a base material having no adsorptivity, these filters are unsatisfactory in terms of the adsorptivity. Additionally, the acetate charcoal filter has the problem of the deterioration of the adsorptivity due to the triacetin. The cavity-filled charcoal filter has the problems of the deterioration of the adsorptivity due to the uneven filling ratio in the production, the high cost of the production apparatus, and the complicated production process. The internally added paper charcoal filter has the problem in which the amount of the charcoal which can be contained in the paper is limited. As stated above, the conventional charcoal filters do not meet performances which are required for the multi-segment filter.

Citation List

Patent Literature

Patent Literature 1: Japanese Patent No. 3235962
Patent Literature 2: Japanese Patent No. 3235963
Patent Literature 3: Japanese Patent No. 4361850
Patent Literature 4: WO 2009/037568
Patent Literature 5: U.S. Patent No. 6837281
Patent Literature 6: Japanese Patent No. 3547768
Patent Literature 7: U.S. Patent No. 2801638
Patent literature 8: WO2008/043988

Discloses a carbon paper wrapper built up of two parts. One part is folded the other part is not. There is active carbon adhered to the inner surface of the non folded wrapper part.

Non Patent Literatures

Non Patent Literature 1: Carbon, 1978, Vol. 16, pp. 47-51, L. A. JONAS and J. A. REHMANN

Disclosure of Invention

The present invention provides a charcoal filter having a high VOC decreasing ability per filter length and a high filtering performance of tar and nicotine, and being produced in an easy and low cost production process; and a cigarette using such a charcoal filter.

According to an aspect of the present invention, there is provided a charcoal filter, characterized by comprising a folded charcoal-containing paper on a surface of which charcoal is externally added.

According to another aspect of the present invention, there is provided a cigarette, characterized by comprising a tobacco rod and the above-described charcoal filter comprising a folded charcoal-containing paper on a surface of which charcoal is externally added.

Brief Description of Drawings

FIG. 1 is a schematic diagram showing an apparatus of producing an internally and externally added paper charcoal filter according to the present invention;

FIG. 2 is a perspective view showing an internally and externally added paper charcoal filter according to the present invention;

FIG. 3 is a perspective view showing an example of a cigarette using an internally and externally added paper charcoal filter according to the present invention;

FIG. 4 is a perspective view showing another example of a cigarette using an internally and externally added paper charcoal filter according to the present invention; and

FIG. 5 is a perspective view showing a further example of a cigarette using an internally and externally added paper charcoal filter.

Best Mode for Carrying Out the Invention

The charcoal filter of the present invention is a filter prepared by folding a charcoal-containing paper on a surface of which charcoal is externally added.

In the present invention, it is preferable that a particle size of charcoal which is contained in a charcoal-containing paper, is 100 $\mu$m or less, and an amount of charcoal which is contained in a charcoal-containing paper, is 50 mg/10 mm-filter or less, for maintenance of qualities such as a thickness and a tensile strength of the charcoal-containing paper in the production steps of the charcoal-containing paper. A BET specific surface area of the charcoal which is contained in the charcoal-containing paper, is preferably 2000 $m^2$/g or less, for the quality maintenance such as inhibition of embrittlement and powdering in the production steps of the charcoal.

In the present invention, it is preferable that an amount of the charcoal which is externally added to the surface of the charcoal-containing paper, is 70 mg/10 mm-filter or less, and a particle size of the charcoal which is externally added to the surface of the charcoal-containing paper, ranges 100 to 800 $\mu$m, for maintaining the amount of the charcoal added and the quality such as a variation in a filter ventilation resistance in the filter production steps. A BET specific surface area of the charcoal which is externally added to the surface of the charcoal-containing paper, is preferably 2000 $m^2$/g or less, for the quality maintenance such as inhibition of embrittlement and powdering in the production steps of the charcoal.

According to the paper charcoal filter of the present invention prepared by folding a charcoal-containing paper on a surface of which charcoal is externally added (hereinafter which may be referred to as an "internally and externally added paper charcoal filter"), a charcoal filter which has a more improved VOC adsorptivity per filter unit and a higher filter performance and is more inexpensive compared to existing charcoal filters can be provided, because the filter base material has the VOC adsorptivity.

Also, when this internally and externally added paper charcoal filter is used, the length of the charcoal filter can be shortened, and thus a flavor-carrying segment in the multi-segment filter can be elongated. If the flavor-carrying segment can be elongated, the amount of the flavor released can be increased; as a result, a cigarette having improved smoking taste and flavor as well as the decreased VOC can be realized in a limited filter length.

In addition, the total filter length can be shortened while the VOC adsorptivity is maintained or improved because the charcoal filter part can be shortened, and thus, a cigarette having multi-segment filter capable of widely designing the cigarette can be provided.

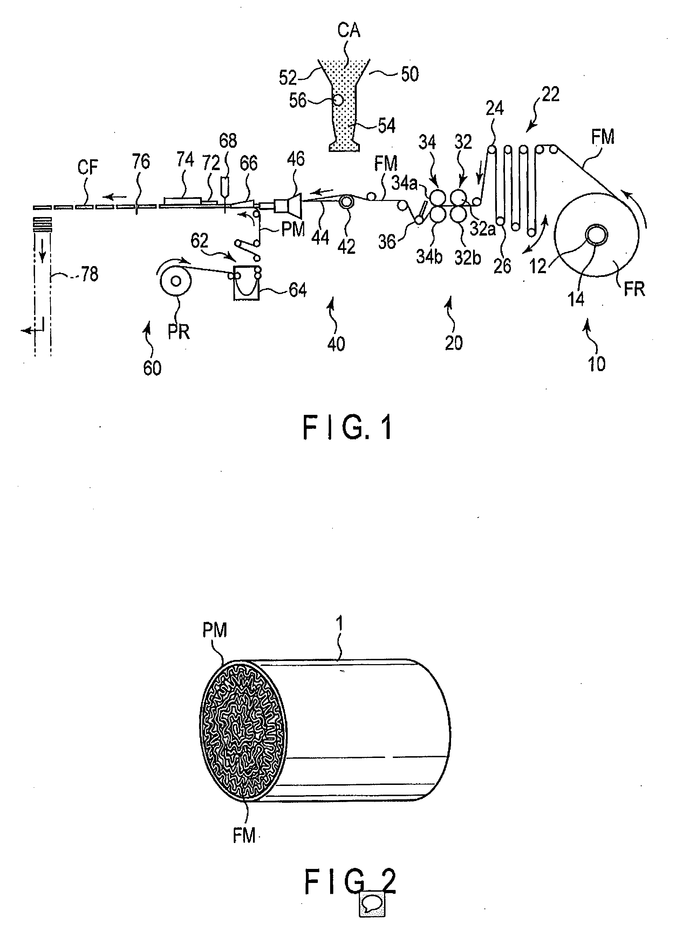

FIG. 1 shows a schematic diagram of a winding-up system for the internally and externally added paper charcoal filter according to the present invention. The internally and externally added paper charcoal filter can be produced using such an apparatus by externally adding charcoal on a surface of the charcoal-containing paper, which has been subjected to a craping treatment, according to the method in Patent Literature 1, for example.

This winding-up system is equipped with a raw paper section 10, a craping section 20, a crumpling guide section 40 and a winding section 60 along a flow of the charcoal-containing paper FM, which is a filter medium.

In the raw paper section 10, a raw paper roll FR of the charcoal-containing paper FM is set to an air shaft 12. The charcoal-containing paper FM is sent out from the raw paper roll FR in association with the revolution of the shaft 12. A powder brake 14 is attached to the shaft 12 to control the speed of revolution of the shaft.

A dancer roller mechanism 22 is arranged at an inlet of the craping section 20. The dancer roller mechanism 22 is utilized to reduce a variation in the tension of the charcoal-containing paper FM, caused by change of a diameter of the raw paper roll FR, a change of a feed speed of the charcoal-containing paper FM, and the like. The dancer roller mechanism 22 has four upper rollers 24 and three lower rollers 26. The charcoal-containing paper FM is passed through between the upper and lower rollers 24 and 26 in zigzags.

The upper rollers 24 are supported by a stationary frame, and the lower rollers 26 are supported by an arm capable of swinging vertically. A pivot sensor is attached to the arm to detect the angle of swing of the rollers. The brake force of the powder brake 14 is controlled based on the detection signals from the pivot sensor. An air cylinder is connected to the arm, and a tension which matches the paper quality of the charcoal-containing paper FM can be obtained by controlling the air pressure.

A pair of feed rollers 32 is arranged following the dancer roller mechanism 22. An upper roller 32a of the feed rollers 32 is formed of two right and left rubber rollers, and a lower roller 32b is formed of a metal roller whose surface is flat. The two rubber rollers, which form the upper roller 32a, have a surface on which a spiral is formed, whereby the charcoal-containing paper FM is expanded in a transverse direction when the feed rollers 32 are rotated, and occurrence of undesired wrinkles can be prevented at this time. A continuously variable transmission is arranged in a drive system of the feed rollers 32 to adjust the rotational speed.

A pair of craping rollers 34, which functions as a craping means for performing a craping treatment, is arranged following the feed rollers 32. The craping rollers 34 are utilized to form vertical wrinkles, which serve for improving the ventilation resistance of the filter, on the charcoal-containing paper FM. A continuously variable transmission is arranged in a drive system of the craping rollers 34 to correct the rotation speed.

Upper and lower rollers 34a and 34b of the craping rollers 34 are each formed of a metal roller having, on its surface, deep grooves extending parallel to the circumferential direction. When the engaging depth (engaging amount) of the groove in the upper and lower rollers 34a and 34b is changed, the depth of the vertical wrinkles, formed on the charcoal-containing paper FM or the degree of extension of the charcoal-containing paper FM, is changed. The ventilation resistance of the filter, accordingly, can be controlled by controlling the engaging depth of the upper and lower rollers 34a and 34b. The ventilation resistance of the filter becomes higher with the increase of the engaging depth.

A touch lever 36 is arranged adjacent to the craping rollers 34. The touch lever 36 is put on the charcoal-containing paper FM, which has been discharged from the craping roller 34, and is utilized to detect the loose state of the paper. The feed speed of the charcoal-containing paper FM is controlled based on its loose state, as described below.

A crumpling guide section 40 is arranged following the touch lever 36. The crumpling guide section 40 is utilized to guide the traveling of the charcoal-containing paper FM, which has been subjected to the craping treatment, so that it is uniformly wound up in a next winding section 60, and is also to crump the charcoal-containing paper FM into a bar. More specifically, the crumpling guide section 40 has a wrapping guide 42, a bundling guide 44 and a T jet 46.

The wrapping guide 42 is formed of a drum-shaped follower roller whose side center is rounded outwards, and a uniform tension is applied by the side surface thereof to the charcoal-containing paper FM, which has been subjected to the craping treatment, in a transverse direction, whereby rapid crumpling of the charcoal-containing paper FM to the T jet 46 can be avoided, and the ventilation resistance of the filter can be stabilized. The position of the drum-shaped roller can be vertically controlled. When the roller is moved upward, the both sides of the charcoal-containing paper FM become loose, and when it is moved downward, the center of the charcoal-containing paper becomes loose.

The bundling guide 44 is formed of four upper guide plates and five lower guide plates, and holds the charcoal-containing paper FM between the plates to deform it into bellows, whereby the charcoal-containing paper FM can be crumpled regularly toward the T jet 46, and the ventilation resistance of the filter can be stabilized.

T jet 46 is formed of a reducer-shaped tube, and sends the bundled charcoal-containing paper FM into the winding section 60. Compressed air is sent into the T jet 46, to suppress friction heat at a tip of a tong of the winding section 60, and to stabilize the sending of the charcoal-containing paper FM.

Charcoal CA is externally added to the charcoal-containing paper FM at a position corresponding to the crumpling guide section 40. A charcoal dispenser 50, which is placed upward the crumpling guide section 40, is used. The charcoal dispenser 50 has a hopper 52 for storing the charcoal and a feed pipe 54 which is connected downward the hopper 52. A roller 56 is arranged in the feed pipe 54 to control the amount of the charcoal fed.

A wrapping paper feed mechanism 62 is arranged in the winding section 60 to feed a plug wrapping paper PM. The plug wrapping paper PM is sent out from the raw paper roll PR, and after it is passed through a reservoir 64, it is fed to an outlet of the T jet 46. Here, the plug wrapping paper PM is fed in a state in which it is put on the charcoal-containing paper FM, which has been bundled in the T jet 46.

The plug wrapping paper PM is wrapped around the charcoal-containing paper FM which is formed in a rod whose cross-section is a circle while it is passed through the tubular tong 66, which functions as a winding means, together with the bundled charcoal-containing paper FM. The charcoal-containing paper FM and the plug wrapping paper PM are further passed through a paste lap gun 68, an ironing device 72 and a cooler bar 74, whereby they are integrated, and then it is serially cut by a cutter 76 into a desired size. The thus produced filters CF are finally collected by a stocker 78.

As described above, the internally and externally added paper charcoal filter of the present invention can be produced easily and at low cost, only by employing the existing winding-up system for the paper charcoal filter, and using the charcoal-containing paper as the starting sheet.

FIG. 2 is a perspective view showing the internally and externally added paper charcoal filter according to the present invention. This internally and externally added paper charcoal filter 1 has such a shape that the charcoal-containing paper FM on a surface of which charcoal is externally added is folded, and the plug wrapping paper PM is wrapped around the circumference thereof.

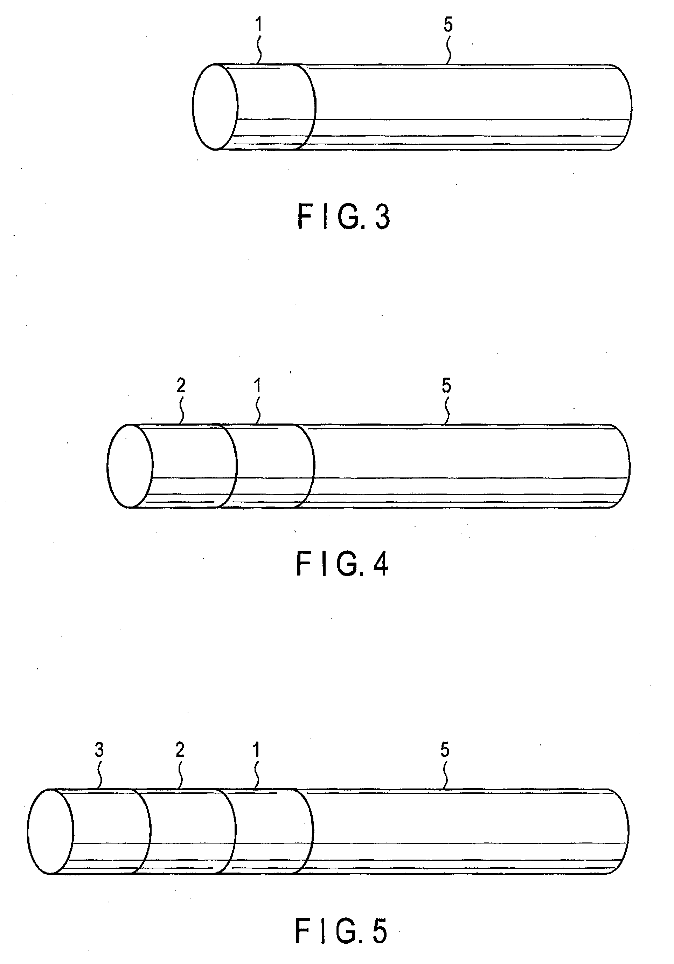

FIG. 3 is a perspective view showing a cigarette using the internally and externally added paper charcoal filter according to the present invention. This cigarette has a shape in which the internally and externally added paper charcoal filter 1 is connected to a mouthpiece side of the tobacco rod 5.

FIG. 4 is a perspective view showing another cigarette using the internally and externally added paper charcoal filter according to the present invention. This cigarette is a multi-segment type cigarette in which the internally and externally added paper charcoal filter 1 and a flavor-carrying segment 2 having a filter shape are connected to a mouthpiece side of a tobacco rod 5.

FIG. 5 is a perspective view showing a further cigarette using the internally and externally added paper charcoal filter according to the present invention. This cigarette is a multi-segment type cigarette in which the internally and externally added paper charcoal filter 1, a flavor-carrying segment 2 and an acetate filter 3 are connected to a mouthpiece side of the tobacco rod 5. In this case, the flavor-carrying segment 2 may have a filter shape, or a natural herb may be used as the segment.

Examples

1. Experiment

1.1. Sample

1.1.1. Charcoal

Coconut shell charcoal having a particle size of 212 to 600 $\mu$m, available from Kuraray Chemical Co., Ltd., and classified through a 28-mesh and 70-mesh sieves, was prepared as externally added charcoal. When the coconut shell charcoal was analyzed according to the method described in the item 1.2., it was found that it had a BET specific surface area of 1046 m$^2$/g.

1.1.2. Base Material

Properties of base materials are shown in Table 1. The following two types of raw papers, available from Kuraray Chemical Co., Ltd., were provided as base materials A and B. Both papers had a width of 220 mm. The both had the same amount and type of a pulp material. The charcoal which was internally added to the base material A had a BET specific surface area of 1784 m$^2$/g, measured according to the method described in the item 1.2., and a particle size of 13.6 $\mu$m, measured according to the method described in the item 1.3.

Table 1

|  | Base material A | Base material B |
|---|---|---|
| Basis weight of Pulp [g/m$^2$] | 32.2 | 36.6 |
| Thickness of Pulp [mm] | 0.16 | 0.09 |
| Amount of Added Charcoal [g/m$^2$] | 10.7 | 0 |
| BET Specific Surface Area of Charcoal [m$^2$/g] | 1784 | - |
| Particle Size of Charcoal [$\mu$m] | 13.6 | - |

Four types of charcoal filters shown in Table 2 were produced.

Example 1 is an internally and externally added paper charcoal filter of the present invention, prepared by folding the base material A on which charcoal of the item 1.1.1. is externally added in an amount of 46 mg per 10 mm-filter.

Comparative Example 1 is a conventional internally added paper charcoal filter, prepared by folding the base material A.

Comparative Example 2 is a conventional externally added paper charcoal filter, prepared by folding the base material B on which the charcoal of the item 1.1.1. is externally added in an amount of 48 mg per 10 mm-filter.

In Example 1 and Comparative Example 2, although the amount of the externally added charcoal and the basis weight of the pulp in the base material were almost the same, the filter ventilation resistance in Example 1 was markedly higher than that in Comparative Example 2. This can be considered to be attributed to the charcoal powder, which was internally added to the base material. Even if the basis weight of the pulp in the base material is made the same, the ventilation resistance can be improved by internally adding the charcoal to the base material.

Comparative Example 3 is a conventional acetate charcoal filter in which an amount of triacetin added is 6 wt%. Comparative Example 3 has an amount of the charcoal and the filter ventilation resistance equivalent to those in Example 1.

1.1.4. Cigarette for Smoke Component Evaluation

In accordance with ISO 3402, cigarettes of Mild Seven Super Light, which had been conditioned at 22°C at a relative humidity of 60% for one week or more, were subjected to grading by weight with an average weight of 100 cigarettes $\pm$ 10 mg. After openings were closed with a tape, the filter plug was removed from the cigarette, and a charcoal filter having a filter length of 10 mm was plugged by hands to provide a test cigarette sample.

1.2. Measurement of Specific Surface Area of Charcoal

A total specific surface area was calculated from adsorption and desorption isothermal line measurement data of nitrogen at 77 K with Autsorb-1-MP (manufactured by Quantachrome Corporation), using a MultiPoint BET method from 0.01 to 0.1 of a relative pressure $P/P_0$. About 0.010 g of the charcoal sample was pre-treated at 0.1 Pa at 573 K for 15 hours, and then the evaluation was performed.

1.3. Measurement of Particle Size of Charcoal

50% median size of a sphere equivalent diameter was calculated from measurements of laser scattering of the charcoal dispersed in water using HORIBA LA-920 (manufactured by Horiba, Ltd.), to calculate a particle size. The charcoal was not pre-treated.

1.4. Water and Nicotine Analysis

The cigarette sample was automatically smoked in accordance with ISO 4387 (a flow rate: 17.5 mL/second, smoking time: 2 seconds/puff, smoking frequency 1 time/minute) using an RM 20 automatic smoking machine (manufactured by Borgwaldt KC Inc.). Crude tar was collected in Cambridge filter CM-133 (manufactured by Borgwaldt KC Inc.). The Cambridge filter was shaken and extracted with 10 mL of methanol, and then nicotine and water were respectively analyzed by GC-FID and GC-TCD. Agilent 7890 (Agilent Technologies Inc.) was used in GC, and the analyses were performed in the following conditions. The amount of tar was obtained by subtracting amounts of water and nicotine from the amount of the crude tar obtained.
GC Analysis Conditions for Water
Column: PoraPakQ (80/100 mesh, 1/8 inch $\times$ 6 FT)
Oven Temperature: 160°C (hold)
Inlet Temperature: 250°C
Pressure: 12.081 psi
Total Flow: 15.3 mL/minute
Detector: TCD
GC Analysis Conditions for Nicotine
Column: DB-WAX (30 m $\times$ 530 $\mu$m $\times$ 1 $\mu$m)
Oven Temperature: 160°C (hold)
Inlet Temperature: 250°C
Pressure: 16 psi
Total Flow: 198 mL/minute
Split Ratio: 9.964:1
Split Flow Rate: 40 mL/minute
Detector: FID

1.5. VOC Analysis

Cigarette samples was automatically smoked in accordance with ISO 4387 (flow rate: 17.5 mL/second, smoking time: 2 seconds/puff, smoking frequency one time/minute) using the RM20 automatic smoking machine (manufactured by Borgwaldt KC Inc.). Smoke, which had passed through Cambridge filter CM-133 (manufactured by Borgwaldt KC Inc.), was collected in methanol which had been cooled to -70°C by dry ice-isopropanol coolant. This methanol was taken by 1 $\mu$L using a microsyringe, which was analyzed by GC-MSD. Agilent 6890 (Agilent Technologies Inc.) and Agilent 5975B (Agilent Technologies Inc.) were respectively used in GC and MSD, and the analyses were performed in the following conditions.
Column: DB-5MS (60 m $\times$ 0.32 mm $\times$ 1.0 $\mu$m)
Oven Temperature: 273 K (6 minute-hold)-(20 K/minute)-498 K (6 minute-hold)
Inlet Temperature: 260°C

Split Ratio: 10:1
Detector: MS
Mass Range: 40.0 - 200.0
Threshold: 40
MS Ion Source: 230°C
MS Quadrupole: 150°C

1.6. Filtering Rate and Adsorption Rate of Smoke

Component

A peak area of a gas chromatogram obtained from a cigarette sample, to which each of the four types of the charcoal filters described above was attached, was compared with a peak area of the gas chromatogram obtained from a simple cigarette, and a filtering rate and an adsorption rate of the charcoal filter were obtained in accordance with the following formula:

$$E_i = \frac{(A_{i,in} - A_{i,out})}{A_{i,in}} \qquad (1)$$

Wherein $A_{i,in}$ and $A_{i,\,out}$ are peak areas of a smoke component i from the cigarette to which the charcoal filter was attached and from the simple cigarette, respectively.

2. Results

The results are shown in Table 2.

Table 2

|  | Example 1 | Comparative Example 1 | Comparative Example 2 | Comparative Example 3 |
|---|---|---|---|---|
| Filter | Internally and Externally added Paper Charcoal Filter | Internally added Paper Charcoal Filter | Externally added Paper Charcoal Filter | Acetate Charcoal Filter |
| Base material | A | A | B | - |
| Amount of Internally Added Charcoal [mg/10mm-CF] | 24 | 24 | 0 | 0 |
| Amount of Externally Added Charcoal [mg/10mm-CF] | 46 | 0 | 48 | 40 |
| Total Amount of Charcoal [mg/10mm-CF] | 69 | 24 | 48 | 40 |
| Ventilation Resistance of Filter [mmAq/10mm-CF] | 46 | 21 | 15 | 41 |
| Decreasing rate [-] |  |  |  |  |
| Tar | 0.41 | 0.29 | 0.20 | 0.26 |
| Nicotine | 0.33 | 0.24 | 0.14 | 0.16 |
| Acetaldehyde | 0-60 | 0.21 | 0.30 | 0.09 |
| 1,3-Butadiene | 0.55 | 0.14 | 0.29 | 0.18 |
| Acrolein | 0.81 | 0.53 | 0.53 | 0.28 |
| Isoprene | 0.73 | 0.38 | 0.42 | 0.23 |
| Benzene | 0.86 | 0.60 | 0.53 | 0.29 |

(continued)

|  | Example 1 | Comparative Example 1 | Comparative Example 2 | Comparative Example 3 |
|---|---|---|---|---|
| Filter | Internally and Externally added Paper Charcoal Filter | Internally added Paper Charcoal Filter | Externally added Paper Charcoal Filter | Acetate Charcoal Filter |
| Toluene | 0.89 | 0.67 | 0.57 | 0.33 |

When the internally and externally added paper charcoal filter in Example 1 was compared with the externally added paper charcoal filter in Comparative Example 2 for the decreasing rate of tar or nicotine, the decreasing rate in Example 1 was significantly higher. It can be considered the difference in the decreasing rate of tar or nicotine results from the ventilation resistance of the filter. It was found that, because the internal addition of the charcoal powder to the base material can improve the ventilation resistance of the charcoal filter, if a same basis weight of pulp is used for the base material, the internally and externally added paper charcoal filter in Example 1 is more advantageous than the externally added paper charcoal filter in Comparative Example 2 for decreasing properties of tar and nicotine.

When the internally and externally added paper charcoal filter in Example 1 was compared with the acetate charcoal filter in Comparative Example 3 for the decreasing rate of tar or nicotine, the decreasing rate in Example 1 was significantly higher, despite that the ventilation resistance of the filter was almost the same.

It can be considered from the above that the difference in the decreasing rate of tar or nicotine between the internally and externally added paper charcoal filter in Example 1 and the acetate charcoal filter in Comparative Example 3 results from the difference in the decreasing properties of the base materials. The internally added paper charcoal filter is higher in the decreasing property of tar or nicotine per ventilation resistance than the acetate fiber; as a result, the internally and externally added paper charcoal filter in Example 1 is more advantageous in the decreasing property of tar or nicotine than the acetate charcoal filter in Comparative Example 3.

As described above, the internally and externally added paper charcoal filter in Example 1 is more improved in the filter performance of tar or nicotine than conventional charcoal filters.

When the internally and externally added paper charcoal filter in Example 1 is compared in the decreasing rate of a vapor phase component with the externally added paper charcoal filter in Comparative Example 2 and the acetate charcoal filter in Comparative Example 3, it can be found that the decreasing rates of all the VOCs are higher in Example 1.

It can be considered that the VOC decreasing property observed in the internally added paper charcoal filter in Comparative Example 1 is attributed to the charcoal internally added to the base material A.

It can be considered that the difference in the VOC decreasing rate between the externally added paper charcoal filter in Comparative Example 2 and the acetate charcoal filter in Comparative Example 3 is mainly caused by deactivation of the charcoal due to the triacetin added to the acetate charcoal filter.

As described above, the VOC decreasing ability is provided to the filter base material in the internally and externally added paper charcoal filter in Example 1; as a result, the VOC adsorptivity thereof is more improved compared to the conventional charcoal filter.

This reveals that the internally and externally added paper charcoal filter can improve the filter performance of tar or nicotine and the VOC decreasing property better than conventional charcoal filters.

**Claims**

1. A charcoal filter, **characterized by** comprising a folded charcoal-containing paper on a surface of which charcoal is externally added.

2. The charcoal filter according to claim 1, **characterized in that** the charcoal contained in the charcoal-containing paper has a particle size of 100 $\mu$m or less.

3. The charcoal filter according to claim 1, **characterized in that** the charcoal is contained in an amount of 50 mg/10 mm-filter or less in the charcoal-containing paper.

4. The charcoal filter according to claim 1, **characterized in that** the charcoal contained in the charcoal-containing paper has a BET specific surface area of 2000 $m^2$/g or less.

5. The charcoal filter according to claim 1, **characterized in that** the charcoal is externally added in an amount of 70 mg/10 mm-filter or less on the surface of the charcoal-containing paper.

6. The charcoal filter according to claim 1, **characterized in that** the charcoal which is externally added on the surface of the charcoal-containing paper has a particle size of 100 to 800 $\mu$m.

7. The charcoal filter according to claim 1, **characterized in that** the charcoal which is externally added on the surface of the charcoal-containing paper has a BET specific surface area of 2000 m$^2$/g or less.

8. A cigarette, **characterized by** comprising a tobacco rod and the charcoal filter according to claim 1.

9. The cigarette according to claim 8, **characterized by** further comprising a flavor-carrying segment or a segment including a natural herb at a mouthpiece side of the charcoal filter.

10. The cigarette according to claim 9, **characterized by** further comprising an acetate filter at a mouthpiece side of the flavor-carrying segment.


**Patentansprüche**

1. Kohlefilter, **dadurch gekennzeichnet, dass** er ein gefaltetes kohlehaltiges Papier umfasst, wobei Kohle auf eine Oberfläche desselben von außen aufgebracht wird.

2. Kohlefilter nach Anspruch 1, **dadurch gekennzeichnet, dass** die Kohle, die in dem kohlehaltigen Papier enthalten ist, eine Partikelgröße von 100 $\mu$m oder weniger aufweist.

3. Kohlefilter nach Anspruch 1, **dadurch gekennzeichnet, dass** die Kohle in dem kohlehaltigen Papier in einer Menge enthalten ist, die 50 mg/10 mm Filter oder weniger beträgt.

4. Kohlefilter nach Anspruch 1, **dadurch gekennzeichnet, dass** die Kohle, die in den kohlehaltigen Papier enthalten ist, eine spezifische BET-Oberfläche von 2000 m$^2$/g oder weniger aufweist.

5. Kohlefilter nach Anspruch 1, **dadurch gekennzeichnet, dass** die Kohle auf die Oberfläche des kohlehaltigen Papiers von außen in einer Menge von 70 mg/10 mm Filter oder weniger aufgebracht wird.

6. Kohlefilter nach Anspruch 1, **dadurch gekennzeichnet, dass** die Kohle, welche von außen auf die Oberfläche des kohlehaltigen Papiers aufgebracht wird, eine Partikelgröße von 100 bis 800 $\mu$m hat.

7. Kohlefilter nach Anspruch 1, **dadurch gekennzeichnet, dass** die Kohle, welche von außen auf die Oberfläche des kohlehaltigen Papiers aufgebracht wird, eine spezifische BET-Oberfläche von 2000 m$^2$/g oder weniger hat.

8. Zigarette, **dadurch gekennzeichnet, dass** sie eine längliche Tabakfüllung und den Kohlefilter nach Anspruch 1 umfasst.

9. Zigarette nach Anspruch 8, **dadurch gekennzeichnet, dass** sie auf einer Mundstückseite des Kohlefilters weiterhin ein geschmackstragendes Segment umfasst oder ein Segment, das ein natürliches pflanzliches Würzmittel enthält.

10. Zigarette nach Anspruch 9, **dadurch gekennzeichnet, dass** sie auf einer Mundstückseite des geschmackstragenden Segments weiterhin einen Acetatfilter umfasst.


**Revendications**

1. Filtre de charbon, caractérisé comme comprenant un papier contenant du charbon replié sur une surface sur laquelle le charbon est ajouté par voie externe.

2. Filtre de charbon selon la revendication 1, **caractérisé en ce que** le charbon contenu dans le papier contenant le charbon a une taille de particule de 100 $\mu$m ou moins.

**3.** Filtre de charbon selon la revendication 1, **caractérisé en ce que** le charbon est contenu en une quantité de 50 mg/filtre de 10 mm ou moins dans le papier contenant le charbon.

**4.** Filtre de charbon selon la revendication 1, **caractérisé en ce que** le charbon contenu dans le papier contenant le charbon a une surface spécifique BET de 2000 m2/g ou moins.

**5.** Filtre de charbon selon la revendication 1, **caractérisé en ce que** le charbon est ajouté par voie externe en une quantité de 70 mg/filtre de 10 mm ou moins sur la surface du papier contenant le charbon.

**6.** Filtre de charbon selon la revendication 1, **caractérisé en ce que** le charbon qui est ajouté par voie externe sur la surface du papier contenant le charbon a une taille de particule de 100 à 800 $\mu$m.

**7.** Filtre de charbon selon la revendication 1, **caractérisé en ce que** le charbon qui est ajouté par voie externe sur la surface du papier contenant le charbon a une surface spécifique BET de 2000 m$^2$/g ou moins.

**8.** Cigarette, caractérisé comme comprenant une tige de tabac et le filtre de charbon selon la revendication 1.

**9.** Cigarette selon la revendication 8, caractérisée comme comprenant en outre un segment porteur de saveur ou un segment comprenant une herbe naturelle sur un côté d'embout buccal du filtre de charbon.

**10.** Cigarette selon la revendication 9, caractérisée comme comprenant en outre un filtre d'acétate sur un côté d'embout buccal du segment porteur de saveur.

F I G. 1

F I G. 2

EP 2 550 878 B1

FIG. 3

FIG. 4

FIG. 5

13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3235962 B
- JP 3235963 B
- JP 4361850 B
- WO 2009037568 A

- US 6837281 B
- JP 3547768 B
- US 2801638 A
- WO 2008043988 A

**Non-patent literature cited in the description**

- **L. A. JONAS ; J. A. REHMANN.** *Carbon,* 1978, vol. 16, 47-51